POOR
QUALITY

(19) Europäisches Patentamt
European Patent Office
Office européen des brevets

(11) Veröffentlichungsnummer: 0 064 971
B1

(12) **EUROPÄISCHE PATENTSCHRIFT**

(45) Veröffentlichungstag der Patentschrift: 13.01.88

(51) Int. Cl.⁴: C 08 G 63/18, C 08 J 5/18, H 01 B 3/42

(21) Anmeldenummer: 82890071.2

(22) Anmeldetag: 07.05.82

(54) **Hochmolekularer aromatischer Polyester, Verfahren zur Herstellung von Folien aus diesen Polyestern und Folie aus diesen Polyestern, ein elektrischer Leiter mit einer Isolierung aus diesen Polyestern und Verfahren zur Herstellung solcher Isolierungen.**

(30) Priorität: 07.05.81 EP 81890076
09.12.81 AT 5278/81

(43) Veröffentlichungstag der Anmeldung: 17.11.82 Patentblatt 82/46

(45) Bekanntmachung des Hinweises auf die Patenterteilung: 13.01.88 Patentblatt 88/2

(84) Benannte Vertragsstaaten: AT BE CH DE FR GB IT LI NL SE

(56) Entgegenhaltungen:
EP-A-0 041 496
WO-A-82/00149
BE-A-650 440
DE-A-2 950 370
GB-A-997 640
US-A-3 216 970

Die Akte enthält technische Angaben, die nach dem Eingang der Anmeldung eingereicht wurden und die nicht in dieser Patentschrift enthalten sind.

(73) Patentinhaber: ISOVOLTA Österreichische Isolierstoffwerke Aktiengesellschaft, Industriezentrum- Süd, A-2351 Wiener Neudorf (AT)

(72) Erfinder: Rieder, Werner, Dr., Schrutkagasse 70, A-1130 Wien (AT)
Erfinder: Fehrle, Martin, Dr., Mozartstrasse 26, D-7120 Bietigheim - Bissingen (DE)

(74) Vertreter: Stampfer, Heinz, ISOVOLTA Österreichische Isolierstoffwerke AG Industriezentrum- Süd, A-2351 Wiener Neudorf (AT)

EP 0 064 971 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft einen hochmolekularen aromatischen Polyester bzw. Copolyester, bestehend im wesentlichen aus Kettengliedern der Formel

-(-O-X-O-Y-)-,

der in diesen Kettengliedern als Glied X im wesentlichen die Strukturen

$X_1$ = 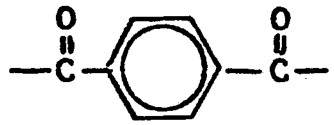 oder $X_2$ = 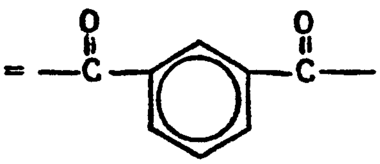

und als Glied Y im wesentlichen die Struktur

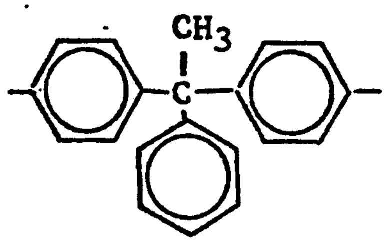

aufweist.

Die Erfindung betrifft ferner ein Verfahren zur Herstellung von Filmen aus solchen Polyestern bzw. Copolyestern und Folien aus solchen Polyestern bzw. Copolyestern.

Schließlich betrifft die Erfindung elektrische Leiter, die eine erfindungsgemäße Polyester bzw. Copolyester enthaltende elektrische Isolation aufweisen, sowie ein Verfahren zur elektrischen Isolierung von elektrischen Leitern mit Hilfe der erfindungsgemäßen Polyester oder Copolyester.

Polyester der eingangs genannten Zusammensetzung sind aus den US-A 3 216 970 und 3 351 624 bekannt. Diese US-A beschreiben die Herstellung von linearen Polyestern auf Basis von aromatischen Dicarbonsäuren, wie Isophthalsäure und Terephthalsäure und verschiedenen aromatischen Diphenolen, darunter auch 1,1-Bis(4-hydroxyphenyl)-1-phenyläthan. Die mit diesem Diphenol hergestellen Polyester haben, wie aus den angegebenen Werten der Grenzviskosität (intrinsic viscosity) zu entnehmen ist, aber nur relativ niedrige Molekulargewichte. Gemäß Beispiel 6 der US-A 3,216,970 wird für einen Polyester auf Basis von 1,1-Bis(4-hydroxyphenyl)-1-phenyläthan und Isophthalsäurechlorid eine Grenzviskosität (intrinsic viscosity) von nur 0,7 dl/g genannt und für aus diesem Polyester hergestellte Folien eine Reißdehnung von 17 % angegeben. Beispiel 11 der US-A 3,216,970 (welches mit Beispiel 3 der US-A 3 351 624 identisch ist) beschreibt die Herstellung eines Polyesters auf Basis von 1,1-Bis(4-hydroxyphenyl) -1-phenyläthan mit einer Grenzviskosität von 0,83 dl/g. Mit diesen bekannten Polyestern können nun keine gegossenen Filme oder Beschichtungen hergestellt werden, die hinsichtlich ihrer mechanischen Eigenschaften den üblichen Anforderungen der Praxis genügen. Insbesondere kann man aus ihnen keine gegossenen Filme oder Beschichtungen herstellen, die den für elektrische Isoliersysteme geforderten mechanischen und Isolationseigenschaften entsprechen.

Es wurde zwar gemäß Beispiel 1 der prioritätsälteren EP-B-0054563 (WO-A-82/00149) ein Polyester aus 1,1-Bis (hydroxyphenyl)-1-phenyläthan und einer äquimolaren Mischung von Isophthalsäuredichlorid und Terephthalsäuredichlorid hergestellt, der eine inhärente Viskosität von 1,84 dl/g aufweist, doch wurden seine mechanischen Eigenschaften nicht bestimmt.

Die Erfindung, wie sie in den Ansprüchen gekennzeichnet ist, löst nun die Aufgabe, hochmolekulare Polyester oder Copolyester der eingangs genannten Art, bzw. daraus hergestellte Filme und/ oder Beschichtungen mit solchen Eigenschaften anzugeben, die ihren Einsatz in der Praxis, insbesondere zur Herstellung von elektrischen Isolierungen erst möglich machen. Die Erfindung löst ferner die Aufgabe, elektrische Leiter mit Isolierungen mit verbesserten Eigenschaften, welche die erfindungsgemäßen Polyester oder Copolyester enthalten, bzw. ein vorteilhaftes Verfahren zur Herstellung solcher elektrischen Isolierungen anzugeben.

Die aus den erfindungsgemäßen Polyestern bzw. Copolyestern hergestellten Folien oder Beschichtungen haben eine Reihe von physikalischen Eigenschaften, die sie für den Einsatz in Elektroisoliersystemen besonders wertvoll machen. Diese vorteilhaften Eigenschaften bestehen in guten mechanischen Eigenschaften, einer hohen Zugfestigkeit, einer geringen Schrumpfneigung bei hoher Temperatur, einer geringen Flammenausbreitungsgeschwindigkeit, einer guten Haftfähigkeit an Metallen, guten Elektroisoliereigenschaften, die sich u.a. aus der hohen Durchschlagsfestigkeit und den geringen dielektrischen Verlustfaktor ergeben, sowie in den günstigen Wasseraufnahmeeigenschaften.

Die Herstellung der Polyester und Copolyester erfolgt vorzugsweise mit Hilfe eines Zweiphasengrenzflächen-Polykondensationsverfahrens, bei welchem aus einer wässrigen Phase, bestehend aus einer Lösung aus dem Diphenol, Alkalihydroxid zur Bildung des Diphenolates in stöchimetrischem Verhältnis oder in geringem Überschuß sowie einem Phasentransferkatalysator, in einem Gemisch aus Wasser

und einem organischen Lösungsmittel aus Lösungsvermittler, mit der organisch-flüssigen Phase, bestehend aus einer Lösung des Säurechlorids in einem chlorierten Lösungsmittel, eine feine Dispersion hergestellt wird, wobei das mit Hilfe des Phasentransferkatalysators in die organisch-flüssige Phase übergeführte Diphenolat mit dem Säurechlorid zur Bildung des Polyesters eine Polykondensationsreaktion eingeht. Ein besonders vorteilhaftes Verfahren dieser Art ist Gegenstand der älteren europäischen Patentanmeldung No. 81890076.3 vom 7. Mai 1981 (EP-A-0041496).

Die Anmelderin hat gefunden, daß die erfindungsgemäßen Polyester bzw. Copolyester vorteilhaft mit dem Diphenol 1,1-Bis-(4-hydroxyphenyl)-1-phenyläthan eines bestimmten Reinheitsbereiches sowie insbesondere mit Hilfe des vorstehend genannten Zweiphasengrenzflächen-Polykondensationsverfahrens hergestellt werden können. Kennzeichnend für den Reinheitsgrad des Diphenols ist z. B. sein auf einem Mikroheiztisch nach Kofler gemessener Schmelzbereich, der bei einem guten Reinheitsgrad z. B. 186 - 190°C und bei noch höherer Reinheit z. B. 188 - 190°C beträgt. Die Herstellung von Diphenolen nach Art von 1,1-Bis-(4-hydroxyphenyl)-1-phenyläthan mit hohem Reinheitsgrad wird vorteilhaft in der älteren DE-2948222A1 beschrieben bzw. ist auch Gegenstand der älteren Europäischen Patentanmeldung Nr. 81890075.5 (EP-A-0065060).

Bei dem erfindungsgemäßen Polyester bzw. Copolyester sind die Wert der Inherenten Viskosität, gemessen bei 30°C in einer Lösung von 0,5 g Polyester in 100 ml Lösungsmittel bestehend aus 60 Gew.% Phenol und 40 Gew.% 1,1,2,2-Tetrachloräthan, höher als 1,0 dl/g, vorzugsweise höher als 1,2 dl/g. Die aus den US-PSen 3 216 970 und 3 351 624 bekannten Polyester derselben Art haben Grenzviskositäten von 0.7 dl/g bzw. 0,83 dl/g. Die diesen bekannten Grenzviskositätswerten entsprechenden Werte der wie oben definierten Inherenten Viskosität liegen dementsprechend niedriger, da hier für dasselbe Polymer die Grenzviskosität immer über der bei einer gegebenen Polymerkonzentration gemessenen Inherenten Viskosität liegt.

Der erfindungsgemäße Polyester bzw. Copolyester kann mit jedem beliebigen Verhältnis von Isophthalsäure zu Terephthalsäure hergestellt werden. Dabei hat sich gezeigt, daß man beim Einsatz von Terephthalsäure allein zu höheren Werten der Inherenten Viskosität gelangt.

Die besonderen Eigenschaften der erfindungsgemäßen Polyester bzw. Copolester kann man ferner durch die Eigenschaften von Folien kennzeichnen, die aus der Lösung des Polyesters in einem chlorierten organischen Lösungsmittel gegossen wurden. Zur Herstellung solcher Folien wird die Polyesterlösung zum Zwecke der Bildung eines Lösungsfilms auf eine glatte Unterlage gegossen, der Film getrocknet und danach als Folie von der Unterlage abgezogen, wonach die Folie schließlich zur Entfernung des Restlösungsmittels noch weiter getrocknet wird.

Die auf diese Weise hergestellten Folienproben weisen eine gemäß der Norm ASTM D 882-75 b gemessene Reißdehnung von mehr als 20 % und - bei höheren Werten der Inherenten Viskosität (IV-Werten) der eingesetzten Polyester - Reißdehnungswerte von mehr als 40 % auf. Dabei hat sich gezeigt, daß bei gleichen IV-Werten bei Polyestern auf Basis eines Gemisches aus Isophthalsäurechlorid und Terephthalsäurechlorid in einem Mischungsverhältnisbereich von 30 zu 70 Gew. % bzw. meist in der Nähe des äquimolaren Verhältnisses die zugehörigen Folienreißdehnungswerte ein Maximum aufweisen.

Nachstehend sei die Abhängigkeit der Reißdehnung von den IV-Werten eines Polyesters auf Basis von 1,1-Bis(4-hydroxyphenyl) -1-phenyläthan näher erläutert: Die Filmbildung beginnt etwa bei IV-Werten von 0,4 dl/g. Bei IV-Werten im Bereich von 1,0 bis 1,5 dl/g werden Folienreißdehnungswerte von 20 % und mehr erreicht, was bei einer Verwendung des Polyesters in Form einer Folie für viele Anwendungszwecke, und bei einer Verwendung in Form von Beschichtungen für die meisten Anwendungszwecke ausreichend ist. Bei IV-Werten von mehr als 1,5 bzw. mehr als 1,8 dl/g werden zugehörige Folienreißdehnungswerte von mehr als 40 % erreicht, was für die Verwendung des Polyesters in Folienform für die meisten denkbaren Anwendungen einen genügend hohen Wert darstellt.

Erfindungsgemäße Polyester, d.h. solche mit IV-Werten von höher als 1,0 dl/g können, wie bereits weiter oben erläutert wurde, in reproduzierbarer Weise auf Basis von Diphenolen hoher Reinheit, wie sie in Anspruch 6 durch deren Schmelzbereiche definiert sind, hergestellt werden. Dabei werden im allgemeinen - unter sonst gleichen Bedingungen - mit einem Diphenol höherer Reinheit höhere IV-Werte des synthetisierten Polyesters erzielt und aus Polyestern mit höheren IV-Werten erhält man höhere zugehörige Folienreißdehnungswerte.

Beim Polymerisationsprozeß hängt nun der erzielbare IV-Wert sehr stark von der Reinheit der eingesetzten Monomeren und Hilfsstoffe ab, d.h. bereits relativ geringe Reinheitsabweichungen wirken sich in relativ großen Abweichungen in den erhaltenen IV-Werten aus. Unter normalen Produktionsbedingungen werden Schwankungen der IV-Werte von ± 5 % vom gewünschten Mittelwert wahrscheinlich nur schwer zu vermeiden sein. Da nun aber, wie die Anmelderin gefunden hat, für die erfindungsgemäßen Polyester im IV-Werte-Bereich zwischen 1,0 und 1,5 dl/g die zugehörigen Folienreißdehnungswerte stärker ansteigen als z. B. im Bereich zwischen 1,5 und 2,0 dl/g, folgt, daß sich die Reißdehnungswerte von insbesondere durch ein Gießverfahren aus den erfindungsgemäßen Polyestern mit IV-Werten von höher als 1,5 dl/g, vorzugsweise höher als 1,8 dl/g hergestellten Folien, die für die meisten Folienanwendungen hoch genug sind, sich in Abhängigkeit von den IV-Werten nur wenig ändern. Das stellt einen zusätzlichen herstellungstechnischen Vorteil dar.

Erfindungsgemäße Polyester mit IV-Werten von 2,5 dl/g und mehr können nur mit extrem reinen Ausgangsstoffen erzeugt werden. Da eine Steigerung über diese IV-Werte hinaus meist keine wesentlichen Verbesserungen der Eigenschaften der aus den Polyestern hergestellten Folien oder Beschichtungen mit sich bringt, andererseits aber mit streigenden IV-Werten im allgemeinen und insbesondere auch wegen der damit verbundenen Abnahme ihrer Löslichkeit eine Erschwerung der Verarbeitbarkeit der Polyester eintritt, sollten

IV-Werte von 2,5 dl/g nicht wesentlich überschritten werden.

Die vorteilhaft durch ein Gießverfahren aus dem erfindungsgemäßen Polyester hergestellten erfindungsgemäßen Folien haben vorzugsweise eine Dicke zwischen 0,010 und 0,250 mm, vorzugsweise aber zwischen 0,020 und 0,150 mm. Solche Folien können vorteilhaft zur Herstellung eines elektrisch isolierenden Bandes dienen. Dieses Band kann dabei vorzugsweise aus einer zumindest an einer Oberflächenseite mit einer Kleberschicht versehenen Folie bestehen. Durch entsprechende Wahl der Kleberschicht kann das Band dabei vorteilhaft als Selbstklebeband ausgeführt werden.

Der erfindungsgemäße isolierte elektrische Leiter enthält in seiner elektrischen Isolierung eine den erfindungsgemäßen Polyester bildende Schicht. Diese Isolierung kann erfindungsgemäß dadurch hergestellt werden, daß der z. B. in Form eines Drahtes vorliegende elektrische Leiter mit einem elektrisch isolierenden Band vorteilhaft einem Selbstklebeband, welches aus der erfindungsgemäßen Folie aufgebaut ist, umwickelt wird. Die Isolierung kann aber auch vorteilhaft in Pulverform in einem Wirbelbett auf einen heißen elektrischen Leiter in Form einer elektrisch isolierenden Schicht aufgesintert werden.

Bei der Gelpermeations-Chromatographie des erfindungsgemäßen Polyesters wurde gefunden, daß bei Polyestern mit höheren IV-Werten das Chromatogramm eine binodale Molekulargewichtsverteilung zeigt. Diese Polyester enthalten dann nicht nur einen hochmolekularen Anteil, sondern auch einen kleineren niedermolekularen Anteil von etwa 10 bis 20 %. Dieser niedermolekulare Anteil bewirkt, daß der erfindungsgemäße Polyester, der in seinem Erweichungsbereich bereits an sich gute Klebeeigenschaften aufweist, in seinen Klebeeigenschaften noch weiter verbessert wird.

Die Anmelderin hat ferner gefunden, daß der nach der Norm ASTM D 2863-77 gemessene Sauerstoffindex bei den erfindungsgemäßen Folien in vorteilhafter Weise höher liegt, als bei Folien aus einem Polyester der selben Art mit niedrigerem Molekulargewicht. Ein möglichst hoher Sauerstoffindex von Kunststoffen wird nämlich in zunehmendem Maße speziell in solchen Anwendungen verlangt, bei denen bei einer thermischen Zersetzung des eingesetzten Kunststoffes, wie sie bei einem Defekt oder Unfall, insbesondere aber auch im Falle eines Brandes eintreten kann, die Rauchentwicklung sowie die Giftigkeit der entstehenden Zersetzungsprodukte möglichst gering sein sollen.

Bei der Herstellung der erfindungsgemäßen Polyester werden im allgemeinen
1,1-Bis(4-hydroxyphenyl)-1-phenyläthan
als Diphenol und iso/tere-Phthalsäure
als Säurekomponenten
eingesetzt. Ein jeweils kleiner Teil dieser Diphenole und/ oder Säurekomponenten kann nun jeweils vorteilhaft durch andere in ähnlicher Weise copolymerisierbare Verbindungen ersetzt werden, ohne daß dadurch der Bereich der Erfindung verlassen wird. Beispiele für solche anderen copolymerisierbaren Verbindungen sind z. B. aus der US-A 3 216 970 oder insbesondere auch aus der DE-A 29 50 370 bekannt.

Das in den nachfolgenden Beispielen zur Herstellung der erfindungsgemäßen Polyester vorteilhaft verwendete Polykondensationsverfahren ist Gegenstand der älteren österreichischen Patentanmeldung 2425/80 oder der älteren europäischen Patentanmeldung 81890076.3 (EP-A- 0 041 496).

**Beispiel 1:**

a) Herstellung der Diphenolat-Lösung:

264 g Natriumhydroxid werden in 4 l destilliertem Wasser gelöst und mit 2,0 l Isopropanol (techn. destilliert) versetzt. In dieser Mischung werden unter Erwärmen auf 70°C 871 g (3,0 Mol) 1,1-Bis (4-hydroxyphenyl)-1-phenylthän mit einem Schmelzbereich von 190 - 191°C, gemessen an einem Mikroheiztisch nach Kofler, gelöst. Nach Abkühlung auf Raumtemperatur versetzt man die klare Lösung des Diphenolats mit 8 Liter destilliertem Wasser.

b) Herstellung der Säurechlorid-Lösung:

304.5 g (1,5 Mol) iso-Phthaloylchlorid und 304,5 g (1,5 Mol)tere-Phthaloylchlorid werden in 2,0 l 1,2-Dichlorythan, das über Calciumhydrid getrocknet und destilliert wurde, bei Raumtemperatur gelöst und unter Ausschluß von Feuchtigkeit aufbewahrt.

c) Herstellung der Katalysatorlösung:

34,5 g (0,15 Mol) Benzyl-triäthylammoniumchlorid werden bei Raumtemperatur in 200 ml destilliertem Wasser gelöst.

d) Polymersynthese:

In einem kühlbaren, mit einem hochtourigen Rührer, Thermometer und Dosierpumpe versehenen Reaktionsgefäß wird die Diphenolat-Lösung vorgelegt, mit 15 l destilliertem 1,2-Dichloräthan und der Katalysatorlösung versetzt und das Gemisch durch intensives Rühren dispergiert. Dieser Dispersion wird dann - unter weiterem intensiven Rühren - während 25 min mittels der Dosierpumpe die Säurechlorid-Lösung zudosiert, wobei die Temperatur der Dispersion, gegebenenfalls durch Kühlung, unter 40°C gehalten wird. Danach wird noch 45 min weitergerührt, wobei die Viskosität der Dispersion ansteigt. Damit ist die Polykondensationsreaktion beendet und der gebildete Polyester in der organisch-flüssigen Phase der Dispersion gelöst.

e) Aufarbeitung:

Nach Überführng der Dispersion in einen geeigneten Behälter trennen sich die wässrige und die organische Phase innerhalb von 15 Minuten. Die wässrige, noch stark alkalische Phase wird verworfen, die organische hochviskose Phase 3 mal mit je 30 l Wasser gewaschen und zur Ausfällung des Polymers mit 30 l techn. Isopropanol unter starkem Rühren portionsweise versetzt, wobei der Polyester einen feinkörnigen Niederschlag bildet. Zur Entfernung von restlichem 1,2-Dichloräthan wird der Polyester mit weiteren 30 l Isopropanol behandelt, abzentrifugiert und in der Zentrifuge 2 mal mit je 10 l Wasser chloridfrei gewaschen. Die Trocknung des erhaltenen Polyesters erfolgt im Umlufttrockenschrank unter Frischluftzufuhr bei 130°C zur Gewichtskonstanz innerhalb von 15 Stunden.

Ausbeute: 1197 g (95 % der Theorie)

Inherente Viskosität: 2,0 dl/g

**Beispiel 2:**

a) Herstellung der Diphenolat-Lösung:

Dieser Verfahrensschritt erfolgt analog wie der gemäß Beispiel 1, mit der Ausnahme, daß hier statt Isopropanol 2,0 l Äthanol (techn.destilliert) als Lösungsvermittler eingesetzt werden.

Die Verfahrensschritte b - d erfolgen danach wie gemäß Beispiel 1.

Ausbeute: 1210 g (96 % der Theorie)

Inherente Viskosität: 1,65 dl/g

**Beispiel 3:**

Zur Herstellung einer Folie wird als Gießlösung eine 7,5 Gew.-%ige Lösung des gemäß Beispiel 1 synthetisierten Polyesters in 1,2-Dichloräthan hergestellt und aus ihr mittels einer Foliengießmaschine eine Folie von 0,025 mm Dicke hergestellt. Die nach der Norm ASTM D 882-75b bestimmte Reißdehnung dieser Folie betrug 61 %.

Der Sauerstoffindex einer durch Handgießen aus derselben Gießlösung hergestellten Folie von 0,125 mm Dicke, bestimmt nach der Norm ASTM D 2863-77, betrug 27 %.

**Beispiel 4:**

Unter Verwendung des im Beispiel 1 beschriebenen Verfahrens wird die Synthese unter Einsatz von 2 Mol 1,1-Bis-(4-hydroxyphenyl)-1-phenyläthan mit einem Schmelzbereich von 188 - 190°C mit 2 Mol tere-Phthaloylchlorid während 45 min durchgeführt. Der analog wie in Beispiel 1 aufgearbeitete Polyester hat eine Inherente Viskosität von 2,23 dl/g. Die Reißdehnung einer aus diesem Polyester wie nach Beispiel 3 gegossenen Folie einer Dicke von 0,025 mm bestimmt nach der Norm ASTM D 882-75b beträgt 46 %.

**Beispiel 5:**

Unter Verwendung des in Beispiel 1 beschriebenen Verfahrens wird die Synthese unter Einsatz von 2 Mol 1,1-Bis-(4-hydroxyphenyl)-1-phenyläthan derselben Qualität wie in Beispiel 4 und 2 Mol eines äquimolaren Gemisches aus iso-Phthaloylchlorid und tere-Phthaloylchlorid während 45 min durchgeführt. Der analog wie in Beispiel 1 aufgearbeitete Polyester hat eine Inherente Viskosität von 2,11 dl/g. Die Reißdehnung einer aus diesem Polyester wie nach Beispiel 3 gegossenen und ausgemessenen Folie einer Dicke von 0,025 mm beträgt 47 %.

**Beispiel 6:**

Mit Hilfe des in Beispiel 1 beschriebenen Verfahrens wird die Synthese unter Einsatz von 2 Mol 1,1-Bis-(4-hydroxyphenyl)-1-phenyläthan derselben Qualität wie gemäß Beispiel 4 und 2 Mol iso-Phthaloylchlorid während 45 min durchgeführt. Der analog wie gemäß Beispiel 1 aufgearbeitete Polyester hat eine Inherente Viskosität von 1,21 dl/g. Die zugehörige wie gemäß Beispiel 3 gemessene Folienreißdehnung beträgt 44 %.

**Beispiel 7:**

Um die vorteilhaften Eigenschaften des erfindungsgemäßen Polyesters darzulegen, wird die Synthese gemäß Beispiel 5, bei der 1,1-Bis(4-hydroxyphenyl)-1-phenyläthan hoher Reinheit mit einem Schmelzbereich von 188 - 190°C eingesetzt wurde (Synthese C), mit den Ergebnissen zweier weiteren Synthesen verglichen, bei denen - unter sonst gleichen Bedingungen - das Diphenol 1,1-Bis(4-hydroxyphenyl)-1-phenylä-than mit niedrigeren Reinheitswerten eingesetzt wird. Bei der ersten dieser Vergleichssynthesen hat das eingesetzte Diphenol einen Schmelzbereich von 183-189°C (Synthese A) und bei der zweiten Vergleichssynthese einen Schmelzbereich von 185 - 190°C (Synthese B). Die für diese beiden Vergleichssynthesen und für die Synthese gemäß Beispiel 5 erhaltenen Werte der Inherenten Viskosität (IV-Wert) und der zugehörigen Folienreißdehnung sind in der nachstehenden Tabelle I angegeben.

**Tabelle I**

| Synthese | Diphenol-Schmelzbereich | IV-Wert in dl/g | Reißdehnung in % ASTM D 882-75b |
|---|---|---|---|
| A | 183-189°C | 0,99 | 16 |
| B | 185-190°C | 1,65 | 32 |
| C | 188-190°C | 2,11 | 47 |

Die Zahlen in der Tabelle I zeigen den starken Anstieg der IV-Werte der Polyester mit zunehmender Reinheit des bei der Polyestersynthese eingesetzten Diphenols, wobei der Grad der Reinheit durch die Höhe der unteren Grenztemperatur des Diphenol-Schmelzbereiches charakterisiert wird. Sie zeigen ferner den Anstieg der Folienreißdehnung mit ansteigenden IV-Werten.

**Beispiel 8:**

In der nachstehenden Tabelle II sind für Folien einer Dicke von 0,025 mm, die aus den Polyestern gemäß den Synthesen A, B und C gemäß Beispiel 7 hergestellt wurden, einige wichtige Meßergebnisse angegeben. Dabei wurden die Dielektrizitätskonstante und der dielektrische Verlustfaktor nach DIN 53483 bestimmt. Die für die Folieneigenschaften wichtigen Werte für die Durchschlagsfestigkeit sind in Volt per mil. angegeben. Die Reindehnung und die Zugfestigkeit wurden nach DIN 53455 und das Elastizitätsmodul nach DIN 53457 bestimmt.

Für die in $N_2$ durchgeführten Thermogravimetrischen Analysen (TGA) sind die zu 5 % bzw. 20 % Verlust gehörigen Temperaturen angegeben. Die Messung der Wasserabsorption erfolgte nach ASTM D-570-77.

**Tabelle II**

| Film gem. Synthese | A | B | C |
|---|---|---|---|
| Dielektrizitätskonstante bei 1,0 kHz | 3,0 | 3,1 | - |
| Dielektrischer Verlustfaktor bei 1,0 kHz | 0,005 | 0,005 | - |
| Durchschlagsfestigkeit (Vol/mil) | - | 4174 | 4349 |
| Reißdehnung in % | 16 | 32 | 47 |
| Zugfestigkeit in kpsi | 10,9 | 10,6 | 9,3 |
| Elastizitätsmodul in kpsi | 204 | 203 | 207 |
| TGA °C bei 5 % Verlust in $N_2$ | 482 | 485 | 484 |
| TGA °C bei 20 % Verlust in $N_2$ | 510 | 515 | 510 |
| Wasserabsorption % Gewichtsänderung | + 0,33 | + 0,35 | + 0,51 |

**Patentansprüche**

1. Hochmolekularer Polyester, bestehend im wesentlichen aus Kettengliedern der Formel
-(-O-X-O-Y-)-,
der in diesen Kettengliedern als Glied X im wesentlichen die Strukturen

$X_1$ = 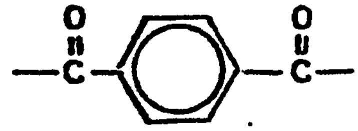 oder $X_2$ = 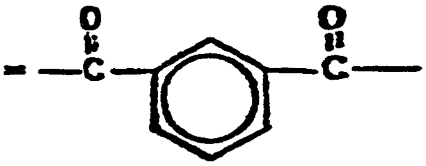

und als Glied Y im wesentlichen die Struktur

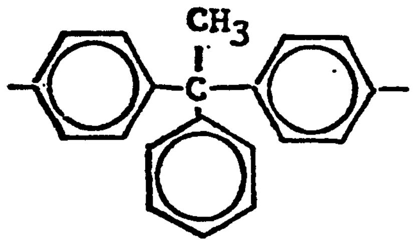

aufweist, dadurch gekennzeichnet, daß der Polyester eine Inherente Viskosität von höher als 1,0 dl/g, vorzugsweisehöher als 1,2 dl/g, gemessen bei 30°C in einer Lösung von 0,5 g Polyester in 100 ml Lösungsmittel, bestehend aus 60 Gew.-% Phenol und 40 Gew.-% 1,1,2,2-Tetrachloräthan, aufweist, ausgenommen ein Polyester mit einer inherenten Viskosität von 1,84 dl/g, der aus 1,1-Bis (4-hydroxyphenyl) -1-phenyläthan und einer äquimolaren Mischung von Isophtalsäure-dichlorid und Terephthalsäure-dichlorid hergestellt worden ist.

2. Hochmolekularer Polyester nach Anspruch 1, dadurch gekennzeichnet, daß eine Folie gegossen aus einer Lösung dieses Polyesters in einem chlorierten organischen Lösungsmittel eine gemäß der Norm ASTM D 882-75 b gemessene Reißdehnung von mindestens 20 %, vorzugsweise mindestens 40 % aufweist.

3. Hochmolekularer Polyester nach Anspruch 1 oder 2, dadurch gekennzeichnet, daß zwischen 30 und 70 % der Kettenglieder als Glied X die Struktur X und zwischen 70 und 30 % der Kettenglieder als Glied X die Struktur $X_2$ haben.

4. Hochmolekularer Polyester nach einem der Ansprüche 1 bis 3, dadurch gekennzeichnet, daß seine Inherente Viskosität höher als 1,5 dl/g, vorzugsweise höher als 1,8 dl/g ist.

5. Hochmolekularer Polyester nach einem der Ansprüche 1 bis 4, dadurch gekennzeichnet, daß er auf Basis von 1,1-Bis (4-hydroxyphenyl)-1-phenyläthan hergestellt ist, das einen auf einem Mikroheiztisch nach Kofler bestimmten Schmelzbereich aufweist, dessen untere Grenztemperatur mindestens 186°C vorzugsweise jedoch mindestens 188°C beträgt.

6. Hochmolekularer Polyester, bestehend im wesentlichen aus Kettengliedern der Formel

-(-O-X-OY-)

der in diesen Kettengliedern als Glied X im wesentlichen die Strukturen

$X_1$ = 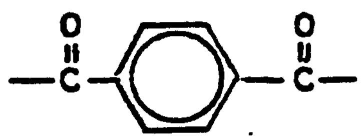 oder $X_2$ = 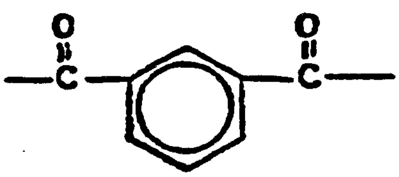

und als Gleid Y im wesentlichen die Struktur

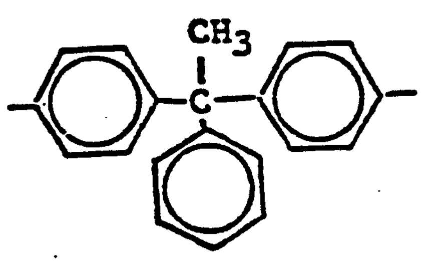

aufweist, dadurch gekennzeichnet, daß der Polyester eine Inherente Viskosität von höher als 1,0 dl/g, vorzugsweise höher als 1,2 dl/g, gemessen bei 30°C in einer Lösung von 0,5 g Polyester in 100 ml Lösungsmittel, bestehend aus 60 Gew.-% Phenol und 40 Gew.-% 1,1,2,2 - Tetrachloräthan, aufweist und daß ein kleiner Teil der Kettenglieder als Glied X und/oder Y Reste polykondensierbarer Verbindungen aufweist, die sich von den Strukturen $X_1$, $X_1$ oder Y unterscheiden.

7. Folie aus einem Polyester bestehend im wesentlichen aus Kettengliedern der Formel

-(- O-X-O-Y-)

der in diesen Kettengliedern als Glied X im wesentlichen die Strukturen

$X_1$ = 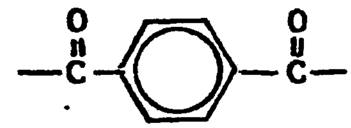 oder $X_2$ = 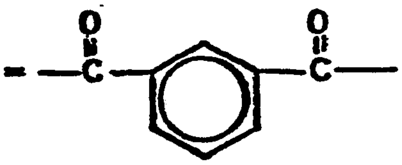

und als Glied Y im wesentlichen die Struktur

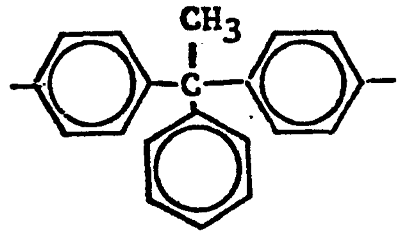

aufweist, dadurch gekennzeichnet, daß der Polyester eine Inherente Viskosität von höher als 1,0 dl/g, vorzugsweise höher als 1,2 dl/g, gemessen bei 30°C in einer Lösung von 0,5 g Polyester in 100 ml Lösungsmittel, bestehend aus 60 Gew.-% Phenol und 40 Gew.-% 1,1,2,2 - Tetrachloräthan, aufweist.

8. Folie nach Anspruch 7, dadurch gekennzeichnet, daß sie eine gemäß der Norm ASTM D 882-75 b gemessene Reißdehnung von mindestens 20 %, vorzugsweise mindestens 40 % aufweist.

9. Folie nach Anspruch 7 oder 8, dadurch gekennzeichnet, daß im Polyester zwischen 30 oder 70 % der Kettenglieder als Glied X die Struktur $X_1$ und zwischen 70 und 30 % der Kettenglieder als Glied X die Struktur $X_2$ haben.

10. Folie nach einem der Ansprüche 7 bis 9, dadurch gekennzeichnet, daß die Inherente Viskosität des Polyesters höher als 1,5 dl/g, vorzugsweise höher als 1,8 dl/g ist.

11. Folie nach einem der Ansprüche 7 bis 10, dadurch gekennzeichnet, daß im Polyester ein kleinerer Teil der Kettenglieder als Glied X und/oder Y Reste polykondensierbarer Verbindungen aufweist, die sich von den Strukturen $X_1$, $X_2$ oder Y unterscheiden.

12. Folie nach einem der Ansprüche 7 bis 11, dadurch gekennzeichnet, daß der Polyester auf Basis von 1,1-Bis (4-hydroxyphenyl)-1- phenyläthan hergestellt ist, das einen auf einem Mikroheiztisch nach Kofler bestimmten Schmelzbereich aufweist, dessen untere Grenztemperatur mindestens 186°C, vorzugsweise jedoch mindestens 188°C beträgt.

13. Folie nach einem der Ansprüche 7 bis 12, dadurch gekennzeichnet, daß sie eine Dicke zwischen 0,010 und 0,250 mm und eine gemäß der Norm ASTM D882-75 b gemessene Reißdehnung von mindestens 40 % aufweist.

14. Folie nach einem der Ansprüche 7 bis 13, dadurch gekennzeichnet, daß sie einen gemäß der Norm ASTM D 2863-77 bei 0,125 mm Foliendicke gemessenen Sauerstoffindex (oxygen index) von mindestens 25 %, vorzugsweise jedoch von mindestens 27 % aufweist.

15. Folie nach einem der Ansprüche 7 bis 14, dadurch gekennzeichnet, daß sie zumindest an einer Oberflächenseite mit einer Kleberschicht versehen ist.

16. Verfahren zur Herstellung einer Folie gemäß einem der Ansprüche 7 bis 15, gekennzeichnet durch Herstellung einer den Polyester enthaltenden Lösung mit einem niedrig-siedenden chlorierten organischen Lösungsmittel, durch Gießen der Lösung auf eine Unterlage zum Zwecke der Bildung eines Lösungsfilms auf dieser Unterlage, durch Trocknung dieses Films zum Zwecke der Abführung des größten Teiles des Lösungsmittels, durch Trennung des durch diese Trocknung in eine Folie übergeführten Films von der Unterlage und durch weitere Trocknung der Folie zum Zwecke der Entfernung des größten Teiles des noch verbliebenen Lösungsmittels.

17. Elektrischer Leiter, dadurch gekennzeichnet, daß er eine elektrisch isolierende Schicht aus einem Polyester derselben Zusammensetzung wie die der Folie gemäß einem der Ansprüche 7 und 9 bis 12 enthält.

## Claims

1. High-molecular polyester, consisting substantially of chain members of the formula
-(-O-X-O-Y-)-Y
which in these chain members as member X substantially has the structures

$X_1$ = 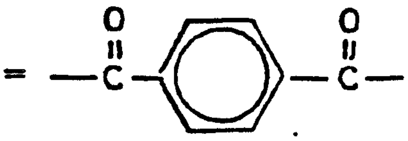 or $X_2$ = 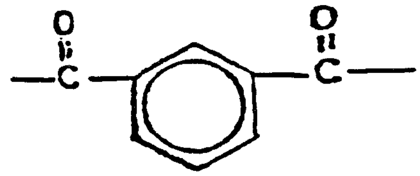

and as member Y substantially has the structure

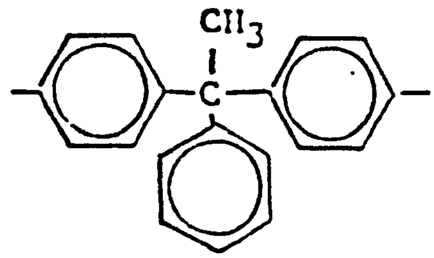

characterized in that the polyester has an inherent viscosity of greater than 1.0 dl/g, preferably greater than 1.2 dl/g measured at 30°C in a solution of 0.5 g polyester in 100 ml solvent, consisting of 60 %-wt. phenol and 40 %-wt. 1,1,2,2 -tetrachloroethane with the exception of a polyester with an inherent viscosity of 1.84 dl/g, which has been produced from 1,1-bis (4-hydroxyphenyl)-1-phenylethane and an equimolar mixture of isophthalic acid dichloride and terephthalic acid dichloride.

2. High-molecular polyester according to Claim 1, characterized in that a sheet cast from a solution of this polyester in a chlorinated organic solvent has an elongation at break, measured according to the standard ASTM D 882-75 b of at least 20 %, preferably at least 40 %.

3. High-molecular polyester according to Claim 1 or 2, characterized in that between 30 or 70 % of the chain members have as member X the structure $X_1$ and between 70 and 30 % of the chain members have as member X the structure $X_2$.

4. High-molecular polyester according to one of Claims 1 to 3, characterized in that its inherent viscosity is greater than 1.5 dl/g, preferably greater than 1.8 dl/g.

5. High-molecular polyester according to one of Claims 1 to 4, characterized in that it is produced on the basis of 1,1-bis-(4-hydroxyphenyl)-1-phenyl ethane, which his a melting range, determined on a Kofler micro-heating table, of which the lower threshold temperature is at least 186° C, preferably however at least 188° C.

6. High-molecular polyester, consisting substantially of chain members of the formula
-(-O-X-O-Y-)
which in these chain members as member X substantially has the structures

$X_1$ = 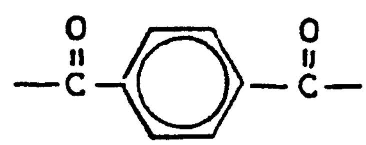 or $X_2$ = 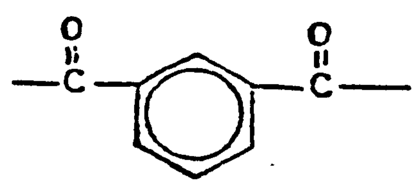

and as member Y substantially has the structure

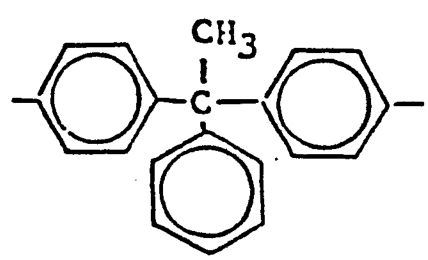

characterized in that the polyester has an inherent viscosity of greater than 1.0 dl/g, preferably greater than 1.2 dl/g, measured at 30°C in a solution of 0.5 g polyester in 100 ml solvent, consisting of 60 %-wt. phenol and 40 %-wt. 1,1,2,2- tetrochloroethane, and that a small proportion of the chain memters has as member X and/or Y radicals of polycondensable compounds, which differ from the structures $X_1$, $X_2$ or Y.

7. Sheet of a polyester consisting substantially of chain members of the formula
-(-O-X-O-Y-)
which in these chain members as member X substantially has the structures

$X_1$ = 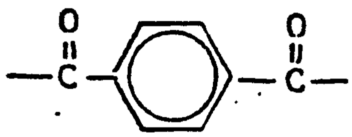 or $X_2$ = 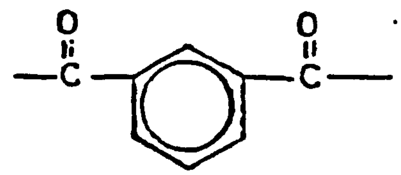

and as member Y substantially has the structure

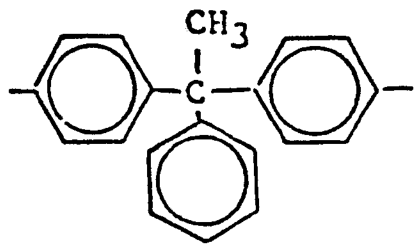

characterized in that the polyester has an inherent viscosity of greater than 1.0 dl/g, preferably greater than 1.2 dl/g, measured at 30°C in a solution of 0.5 g polyester in 100 ml solvent, consisting of 60 %-wt. phenol and 40 %-wt. 1,1,2,2-tetrachloroethane.

8. Sheet according to Claim 7, characterized in that it has an elongation at break, measured according to the standard ASTM D 882-75b of at least 20 %, preferably at least 40 %.

9. Sheet according to Claim 7 or 8, characterized in that in the polyester between 30 or 70 % of the chain members have as member X the structure $X_1$ and between 70 and 30 % of the chain members have as member X the structure $X_2$.

10. Sheet according to one of Claims 7 to 9, characterized in that the inherent viscosity of the polyester is greater than 1.5 dl/g, preferably greater than 1.8 dl/g.

11. Sheet according to one of Claims 7 to 10, characterized in that in the polyester a smaller portion of the chain members has as member X and/ or Y radicals of polyondensable compounds, which differ from the structures $X_1$, $X_2$ or Y.

12. Sheet according to one of Claims 7 to 11, characterized in that the polyester is produced on the baisis of 1,1-bis (4-hydroxyphenyl)-1-phenyl ethane, which has a melting range, determined on a Kofler micro-heating table, of which the lower threshold temperature is at least 186°C, preferably however at least 188°C.

13. Sheet according to one of Claims 1 to 12, characterized in that it has a thickness of between 0.010 and 0.250 mm and an elongation at break, measured according to the standard ASTM D 882-75 b, of at least 40 %.

14. Sheet according to one of Claims 7 to 13, characterized in that it has an oxygen index, measured according to the standard ASTM D 2863-77 at 0.125 mm sheet thickness, of at least 25 %, preferably however at least 27 %.

15. Sheet according to one of Claims 7 to 14, characterized in that it is provided at least on one surface side with a layer of adhesive.

16. Method for the production of a sheet according to one of Claims 7 to 15, characterized by the production of a solution containing the polyester with a low-boiling chlorinated organic solvent, by pouring the solution onto a support for the purpose of the formation of a film of solution on this support, by drying this film for the purpose of removing the majority of the solvent, by separating the film, converted into a sheet through this drying, from the support and by further drying of the sheet for the purpose of removal of the majority of the solvent still remaining.

17. Electric conductor, characterized in that it contains an electrically insulating layer of a polyester of the same composition as that of the sheet according to one of Claims 7 and 9 to 12.

**Revendications**

1. Polyester de poids moléculaire élevé constitué essentiellement de motifs de formule:
-(-O-X-OY-)
dont les éléments X présentent essentiellement la structure:

$X_1$= 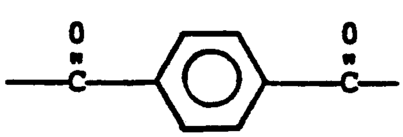 ou $X_2$= 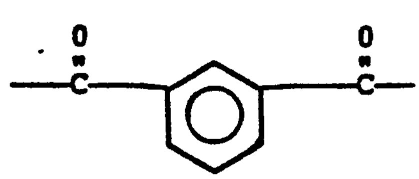

et les éléments Y présentent essentiellement la structure:

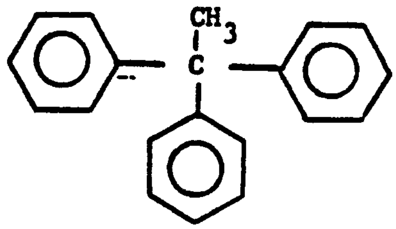

caractérisé en ce que le polyester présente une viscosité inhérente, mesurée à 30° C dans une solution de 0,5 g de polyester dans 100 ml de solvant constitué de 60 % en poids de phénol et 40 % en poids de 1,1,2,2-tétrachloroéthane, supérieure à 1,0 dl/g, de préférence supérieure à 1,2 dl/g, à l'exeption d'un polyester présentant une viscosité inhérente de 1,84 dl/g préparé à partir de 1,1-bis(4-hydroxyphényl)-1-phényléthane et d'un mélange équimolaire de dichloure d'acide isophtalique et de dichlorure d'acide téréphtalique.

2. Polyester de poids moléculaire élevé selon la revendication 1, caractérisé en ce qu'une feuille obtenue par coulage d'une solution de ce polyester dans un solvant organique chloré présente un allongement à la rupture, mesuré selon la norme ASTM D 882-75b, d'au moins 20 %, de préférence d'au moins 40 %.

3. Polyester de poids moléculaire élevé selon la revendication 1 ou 2, caractérisé en ce que de 30 à 70 % des éléments X présentent la structure $X_1$ et de 70 à 30 % ce ces éléments présentent la structure $X_2$.

4. Polyester de poids moléculaire élevé selon l'une des revendications 1 à 3, caractérisé en ce que sa viscosité inhérente est supérieure à 1,5 dl/g, de préférence supérieure à 1,8 dl/g.

5. Polyester de poids moléculaire élevé selon l'une quelconque des revendications 1 à 4, caractérisé en ce qu'il est préparé à partir de 1,1-bis(4-hydroxyphényl)-1-phényléthane et présentant un intervalle du fusion, déterminé selon la méthode de Kofler sur une micro-table chauffante, dont la limite inférieure de température est d'au moins 186° C, et de préférence d'au moins 188° C.

6. Polyester de poids moléculaire élevé constitué essentiellement de motifs de formule:
-(-O-X-O-Y-)
dont les éléments Y présentent essentiellement la structure:

$X_1$= 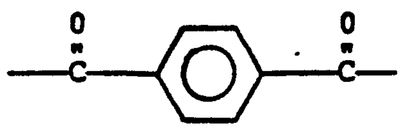 ou $X_2$= 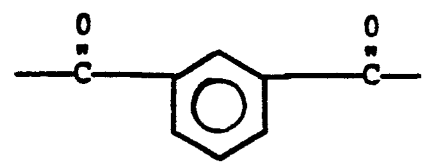

et les éléments Y présentent essentiellement la structure:

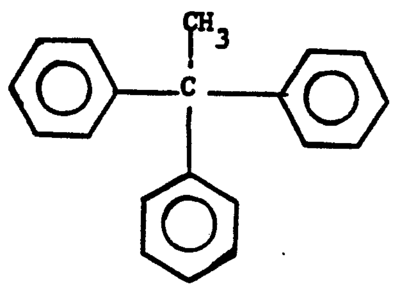

caractérisé en ce que le polyester présente une viscosité inhérente, mesurée à 30° C dans une solution de 0,5 g de polyester dans 100 ml de solvant constitué de 60 % en poids de phénol et 40 % en poids de 1,1,2,2-tétrachloroéthane supérieure à 1,0 dl/g, de préférence supérieure à 1,2 dl/g et en ce qu'une petite partie des éléments X et/ou Y est constituée de restes de dérivés polycondensables qui diffèrent des structures $X_1$, $X_2$ ou Y.

7. Feuille préparée à partir d'un polyester constitué essentiellement de motifs de formule:
-(-O-X-O-Y-)
dont les éléments X présentent essentiellement la structure:

$X_1$= 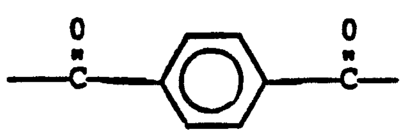 ou $X_2$= 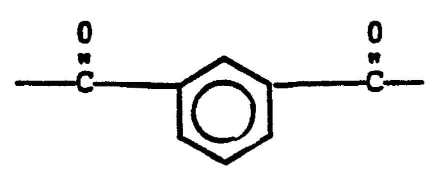

et les éléments Y présente essentiellement la structure:

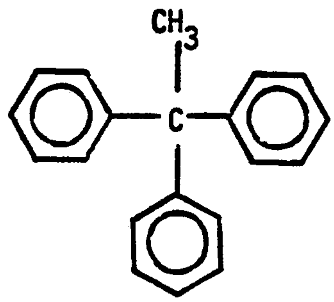

caractérisée en ce que le polyester présente une viscosité inhérente, mesurée à 30°C dans une solution de 0,5 g de polyester dans 100 ml de solvant constitué de 60 % en poids de phénol et 40 % en poids de 1,1,2,2-tétrachloroéthane, supérieure à 1,0 dl/g, de préférence supérieure à 1,2 dl/g.

8. Feuille selon la revendication 7, caractérisée en ce qu'elle présente un allongement à la rupture, mesuré selon la norme ASTM D 882-75b, d'au moins 20 %, de préférence d'au moins 40 %.

9. Feuille selon la revendication 7 ou 8, caractérisee en ce que, dans le polyester, de 30 à 70 % des éléments X présentent la structure $X_1$ et de 70 à 30 % de ces éléments X présentent la structure $X_2$.

10. Feuille selon l'une quelconque des revendications 7 à 9, caractérisée en ce que la viscosité inhérente du polyester est supérieure à 1,5 dl/g, de préférence supérieure à 1,8 dl/g.

11. Feuille selon l'une quelconque des revendications 7 à 10, caractérisé en ce que, dans le polyester, une plus petite partie des éléments X et/ou Y est constituée de restes de dérivés polycondensables qui différent des structures $X_1$, $X_2$ ou Y.

12. Feuille selon l'une quelconque des revendications 7 à 11, caractérisée en ce que le polyester est préparé à partir de 1,1-bis(4-hydroxyphényl)-1-phényléthane présentant un intervalle de fusion, déterminé selon la méthode de Kofler sur une micro-table chauffante, dont la limite inférieure de température est d'au moins 186°C, de préférence d'au moins 188°C.

13. Feuille selon l'une quelconque des revendications 7 à 12, caractérisée en ce qu'elle a une épaisseur comprise entre 0,010 et 0,250 mm et présente un allongement à la rupture mesuré selon la norme ASTM D 882-75b, d'au moins 40 %.

14. Feuille selon l'une quelconque des revendications 7 à 13, caractérisée en ce qu'elle présente un indice d'oxygène (oxygène index), mesuré selon la norme ASTM D 2863-77, sur une feuille ayant une épaisseur de 0,125 mm, d'au moins 25 %, de préférence cependant d'au moins 27 %.

15. Feuille selon l'une quelconque des revendications 7 à 14, caractérisée en ce qu'elle est pourvue, au moins sur l'une de ses faces, d'une couche adhésive.

16. Procedé de préparation d'une feuille selon l'une quelconque de revendications 7 à 15, caractérisé en ce qu'il comprend la préparation d'une solution contenant le polyester dans un solvant organique chloré de bas point d'ébullition, le coulage de la solution sur un support en vue de la formation d'un film de solution sur ce support, le séchage de ce film en vue de l'élimination de la plus grande partie du solvant, la séparation du film ainsi séché en feuille par séchage ultérieur de la feuille en vue de l'élimination de la plus grande partie du solvant résiduel.

17. Conducteur électrique, caractérisé en ce qu'il contient une couche électriquement isolante d'un polyester de la même composition que celle de la feuille selon l'une quelconque des revendications 7 et 9 à 12.